(19) Europäisches Patentamt
European Patent Office
Office européen des brevets

(11) Veröffentlichungsnummer: **0 174 392**
**A2**

(12) # EUROPÄISCHE PATENTANMELDUNG

(21) Anmeldenummer: 84112882.0

(51) Int. Cl.⁴: G 02 C 5/00

(22) Anmeldetag: 25.10.84

(30) Priorität: 07.08.84 DE 3429090

(43) Veröffentlichungstag der Anmeldung:
19.03.86 Patentblatt 86/12

(84) Benannte Vertragsstaaten:
AT BE CH DE FR GB IT LI LU NL SE

(71) Anmelder: Anger, Wilhelm
Via Brattas 4
CH-7500 St. Moritz(CH)

(72) Erfinder: Anger, Wilhelm
Via Brattas 4
CH-7500 St. Moritz(CH)

(74) Vertreter: Grams, Klaus Dieter, Dipl.-Ing. et al,
Patentanwaltsbüro Tiedtke-Bühling-Kinne-Grupe-Pellmann-Grams-Struif Bavariaring 4
D-8000 München 2(DE)

(54) **Randlose Brille.**

(57) Eine Brille vom Typ der sogenannten Beschlagbrille weist außer den Brillengläsern eine Brücke, zwei Bügel, zwei Gelenkstücke für die beiden Bügel, Befestigungsvorrichtungen zum Verbinden der Brücke und der Gelenkstücke mit den Brillengläsern sowie zumindest einen Steg und eine Stegstütze auf, wobei die mechanische, tragende Verbindung zwischen der Brücke und den Gelenkstücken allein die dazwischen angeordneten Brillengläser bewirken und keine Fassungsränder vorhanden sind. Mit Ausnahme gegebenenfalls der Brillengläser bestehen bei dieser Brille alle deren Geometrie bestimmende Bauteile aus einem Kunststoff. Im Vergleich zu einer herkömmlichen Beschlagbrille, bei der diese Bauteile sämtlich aus Metall bestehen, ist die neue Brille leichter, bruchsicherer und auf einfachere Weise dem Brillenträger anpaßbar.

EP 0 174 392 A2

./...

Croydon Printing Company Ltd.

Fig. 1

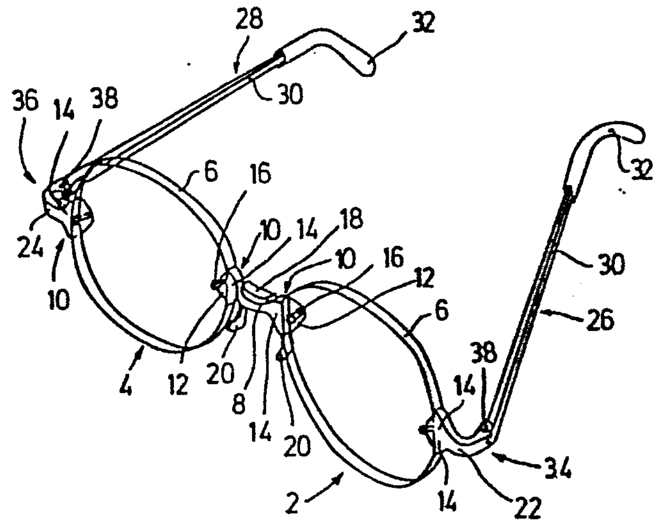
28
32
36
14
38
30
6
16
32
24
10
14
18
10
16
12
30
10
6
26
4
12
20
8
38
14
14
20
34
2
14
22

TIEDTKE - BÜHLING - KINNE - GRUPE
PELLMANN - GRAMS - STRUIF

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München

Wilhelm Anger
7500 St. Moritz / Schweiz

# Randlose Brille zu Korrektionszwecken

Die Erfindung bezieht sich auf eine randlose Brille zu Korrektionszwecken gemäß dem Oberbegriff von Patentanspruch 1.

Eine solche randlose Brille ist bekannt. Es handelt sich dabei um einen Brillentyp, der auch als Beschlagbrille bezeichnet wird und früher als Glasbrille bezeichnet wurde. Die Besonderheit dieses Brillentyps und somit der gattungsgemäßen Brille liegt darin, daß keine Fassungsränder vorhanden sind und daß für die mechanische Verbindung zwischen der Brücke einerseits und den Seitenteilen andererseits allein die jeweils zwischen einem der Seitenteile und der Brücke angeordneten Brillengläser sorgen. Bei den bekannten Brillen dieser Art sind die Brücke, die Gelenkstücke, die Bügel und die Befestigungsvorrichtungen, d.h. alle für den mechanischen Zusammenhalt der Brille sorgenden Einzelteile, sowie auch die üblicherweise vorgesehenen beiden Stegstützen aus Metall gefertigt, um der Brille ausreichende Festigkeit und Steifigkeit zu geben. Dadurch sind die Einzelteile und somit auch diese Brillen in

der Herstellung verhältnismäßig teuer; auch die Anpassung der Brille an die individuellen Bedürfnisse eines Brillenträgers ist schwierig, da außer einer nachträglichen Formgebung der Einzelteile durch Biegen kaum eine Möglichkeit zur Beeinflussung der Form der Einzelteile besteht. Darüber hinaus besteht bei dieser bekannten Brille eine verhältnismäßig hohe Beschädigungsgefahr, da die Befestigungsvorrichtungen üblicherweise ein stiftförmiges, durch ein Loch im Brillenglas verlaufendes Element in Form einer Schraube oder dergleichen aufweisen, das zu hohen Drücken und somit zu hohen Spannungen im Lochrand führt, die wiederum ein Springen des Brillenglases zur Folge haben können. Diese Nachteile stehen den an sich günstigen Eigenschaften gegenüber, daß es sich bei diesen bekannten Brillen um verhältnismäßig leichte und auch ästhetisch befriedigende Brillen handelt, da sie wenig auffällig sind.

Der Erfindung liegt die Aufgabe zugrunde, die gattungsgemäße Brille derart weiterzubilden, daß sie bessere Möglichkeiten zur nachträglichen Anpassung an die Gesichts-, Kopf- und Ohrform eines Brillenträgers bietet.

Diese Aufgabe wird erfindungsgemäß durch die Merkmale im kennzeichnenden Teil von Patentanspruch 1 gelöst, d.h. im wesentlichen dadurch, daß alle für den mechanischen Zusammenhalt der Brille sorgenden Einzelteile einschließlich gegebenenfalls vorhandener stiftförmiger Elemente der Befestigungsvorrichtungen aus Kunststoff gefertigt sind, wobei allenfalls die Gelenkbolzen nicht aus Kunststoff gefertigt sind. Vorzugsweise sind jedoch auch die Gelenkbolzen und darüber hinaus auch die Stegstützen aus Kunststoff gefertigt, so daß sämtliche Bauteile der Brille mit Ausnahme der Brillengläser aus Kunststoff bestehen. Die Brillengläser können

auch bei den erfindungsgemäßen Brillen in üblicher Weise aus Mineralglas oder Kunststoffglas bestehen.

Aufgrund der erfindungsgemäßen Ausbildung sind alle die Geometrie der Brille bestimmenden Bauteile, nämlich die Brücke, die Gelenkstücke und die Bügel aus Kunststoff gefertigt, was es ermöglicht, auf einfache Weise, beispielsweise durch geringe Wärmezufuhr, diese Bauteile nachträglich zu verformen und dadurch beispielsweise den Öffnungswinkel, den Neigungswinkel, die Brückenweite und die Bügellänge zu beeinflussen und zu ändern. Zu diesem Vorteil kommt der Vorteil hinzu, daß die erfindungsgemäße Brille bei gleichen Brillengläsern geringeres Gewicht als eine herkömmliche Beschlagbrille mit Metallbauteilen hat. Darüber hinaus besteht der Vorteil, daß auch das gegebenenfalls vorhandene stiftförmige Element der Befestigungsvorrichtungen aus Kunststoff besteht, wodurch örtlichen hohen Pressungen, die das Brillenglas zum Springen bringen könnten, vorgebeugt ist, so daß die Bruchgefahr insgesamt verringert ist.

Die beste Realisierung der Erfindung liegt darin, die Brücke, die beiden Gelenkstücke, die beiden Bügel und die vier Befestigungsvorrichtungen - gegebenenfalls einschließlich des jeweiligen stiftförmigen Elementes - ausschließlich aus Kunststoff auszubilden und keine Kerne oder Einlagen aus Metall vorzusehen. Als ausschließlich aus Kunststoff gefertigtes Bauteil soll dabei allerdings auch ein Bauteil verstanden werden, dessen Oberfläche metallisiert ist.

Kunststoff ist als Brillenwerkstoff vielfach bekannt. Für Fassungen findet er Anwendung bei sogenannten Kunststoffassungen, bei denen die Brücke, Backen sowie die

Brillengläser vollständig umschließende Fassungsränder einstückig miteinander ausgebildet und aus Kunststoff gefertigt sind. Die zugehörigen Bügel bestehen ausschließlich oder teilweise ebenfalls aus Kunststoff. Bei sogenannten kombinierten Fassungen bestehen die tragenden, für den mechanischen Zusammenhalt der Brille sorgenden Bauteile aus Metall, wobei lediglich weniger belastete oder als Zierrat dienende Bauteile aus Kunststoff gefertigt sind. Schon bei sogenannten randlosen Brillen, bei denen die Brillengläser mit Hilfe eines Kunststoffadens in der Fassung gehalten werden und für die tragende mechanische Verbindung zwischen den beiden Bügelgelenken bzw. Backen sogenannte Balken zusammen mit der Brücke sorgen, bestehen diese Bauteile und die Bügel bei bekannten Brillen ausschließlich aus Metall und sind allenfalls zusätzliche Zierteile aus Kunststoff.

Die erfindungsgemäßen Brillen zeichnen sich nun dadurch aus, daß sie aufgebaut sind aus den gleichen Bauteilen, wie sie im Prinzip von herkömmlichen Beschlagbrillen bekannt sind, daß diese Bauteile - mit Ausnahme allenfalls der Gelenkbolzen - jedoch aus Kunststoff gefertigt sind. Mit anderen Worten heißt dies, daß das Prinzip der Beschlagbrillen, nämlich die mechanische Verbindung zwischen der Brücke einerseits und dem jeweiligen Gelenkstück andererseits ausschließlich mittels des Brillenglases zu bewirken, auf neuartige Weise mit Kunststoffbauteilen verwirklicht ist.

In vorteilhafter Ausbildung der Erfindung ist vorgesehen, daß es sich bei dem Kunststoff um ein Polyätherimid oder Polyäthersulfon handelt.

Weitere vorteilhafte Ausgestaltungen der Erfindung sind in den Unteransprüchen gekennzeichnet.

Ein Ausführungsbeispiel der Erfindung ist in der Zeichnung dargestellt und wird im folgenden näher erläutert. Es zeigen:

Fig. 1 in perspektivischer Ansicht eine Brille von schräg oben und vorn;

Fig. 2 eine ausschnittsweise vergrösserte Darstellung eines Bügelendes im Schnitt gemäß C-D in Fig. 3;

Fig. 3 eine Schnittdarstellung gemäß A-B in Fig. 2; und

Fig. 4 eine vergrößerte Schnittdarstellung eines Gelenks.

Die dargestellte Brille umfaßt zwei korrigierende Brillengläser 2 und 4 aus Kunststoff oder Mineralglas. Jedes dieser beiden Brillengläser 2 und 4 ist mit einem die Umfangsform des Brillenglases festliegenden Rand 6 versehen.

Zwischen einander zugewandten Bereichen der beiden Brillengläser 2 und 4 ist eine Brücke 8 angeordnet, die an jedem ihrer beiden Enden mit einer Befestigungsvorrichtung 10 versehen ist. Die beiden Befestigungsvorrichtungen 10 dienen dazu, die Brücke mit den beiden Brillengläsern 2 und 4 zu verbinden. Jede der beiden Befestigungsvorrichtungen umfaßt einen auf der Rückseite des Brillenglases 2 bzw. 4 angeordneten Schenkel 12 sowie einen Stützabschnitt 14, der sich über eine gewisse Strecke entlang dem Rand 6 erstreckt und an diesem anliegt. Der Schenkel 12 und der Stützabschnitt 14 jeder Befestigungsvorrichtung 10 sind einstückig mit der Brücke 8 ausgebildet. Durch ein nicht bezeichnetes Loch im Brillenglas 2 bzw. 4 verläuft ein stiftförmiges Element 16, das auf seiner Vorderseite kugelförmig verdickt ist und mit dieser kugelförmigen Verdickung in einer entsprechenden Erweiterung des Lochs auf der Vorderseite des jeweiligen Brillenglases sitzt und das auf der Rückseite des Brillenglases fest mit dem Schenkel 12 verbunden ist. Auf diese Weise hält das stiftförmige Element 16 das Brillenglas 2 bzw. 4 fest in Anlage am Schenkel 12 und am Stützabschnitt 14.

An der Brücke 8 ist eine Stegstütze befestigt, die nach unten in zwei Seitenstege 20 übergeht. Die beiden Seitenstege 20 haben die Aufgabe, die Brille auf der Nase des Brillenträgers abzustützen.

Auf der von der Brücke 8 abgewandten Seite eines jeden der beiden Brillengläser 2 und 4 ist ein Gelenkstück 22 bzw. 24 angeordnet, an dem jeweils zwei Gelenkaugen angeformt sind. Mit jedem der beiden Gelenkstücke 22 und 24 ist ferner eine Befestigungsvorrichtung 10 einstückig ausgebildet, die gleiche Ausbildung hat wie die beiden Befestigungsvorrichtungen 10 an der Brücke 8. Die Befestigungsvorrichtungen 10 der Gelenkstücke 22 und 24 liegen mit ihren Stützabschnitten 14 jeweils am Rand 10 an.

Jedes der beiden Gelenkstücke 22 und 24 ist mit einem Bügel 26 bzw. 28 gelenkig verbunden. Jeder der beiden Bügel 26 und 28 besteht aus einem langgestreckten Bügelschaft 30 und einem Bügelendstück 32, das mit dem hinteren Ende des jeweiligen Bügelschaftes 30 verbunden ist und dazu dient, hinter dem Ohr des Brillenträgers zur Anlage am Schädel und/oder Ohr zu kommen und dadurch die aufgesetzte Brille zu sichern.

Eines der beiden Bügelendstücke 32 mit dem zugeordneten Bügelschaft 30 und die Art und Weise der Verbindung dazwischen sind ausschnittsweise und vergrößert in den Figuren 2 und 3 dargestellt. Am hinteren, in den Figuren 2 und 3 rechten Ende des Bügelschaftes 30 ist auf dessen Innenseite eine Feinrillung bzw. Feinverzahnung 40 ausgebildet. Die Zähne der Feinverzahnung 40 verlaufen senkrecht zur Achse des Bügelschaftes 30, wobei die steileren Flanken der Zähne nach vorne, d.h. nach links in den Figuren 2 und 3, weisen. Beim gezeigten Ausführungsbeispiel befindet sich die Feinverzahnung lediglich auf einer Seite des Bügelschaftes 30; sie kann jedoch auch auf mehreren Seiten oder auf einer anderen als der dargestellten Seite des Bügelschaftes ausgebildet sein. Im vorderen. d.h. in den Figuren 2 und 3 linken Ende des Bügelendstücks 32 ist eine Einstecköffnung 42 mit glatten Wänden ausgebildet, die derart dimensioniert ist, daß das Bügelschaftende mit der Feinverzahnung 40 in die Einstecköffnung 42 eingeschoben werden kann. Dabei tritt die Feinverzahnung 40 in Eingriff mit der zugeordneten glatten Wand der Einstecköffnung 42, die sich durch Kaltfließen des Kunststoffwerkstoffs verformt, so daß sich schließlich eine formschlüssige Verbindung ergibt. Diese Art der Verbindung hat den Vorteil, daß sie eine Fixierung des Bügelschaftes 30 und des Bügelendstücks 32 relativ zueinander in beliebiger Stellung ermöglicht und nicht nur in diskreten, durch die Zahnteilung definierten Stellungen. Darüber hinaus ermöglicht sie eine einfache Längenfestlegung für den Bügel, da das Bügelendstück 32 im erforderlichen Ausmaß auf das hintere Ende des Bügelschaftes 30 geschoben werden kann und letzterer darüber hinaus gekürzt werden kann. Die Einstecköffnung 42 kann abweichend vom dargestellten Ausführungsbeispiel ihrerseits mit einer Feinverzahnung versehen sein.

Am vorderen Ende jedes der beiden Bügel 26 und 28 ist ein weiteres, nicht bezeichnetes Gelenkauge angeformt, das zusammen mit den beiden nicht bezeichneten Gelenkaugen des zugeordneten Gelenkstücks 22 bzw. 24 ein Gelenk 34 bzw. 36 bildet, wobei zum Gelenk 34 bzw. 36 außerdem ein Gelenkbolzen 38 gehört, bei dem es sich beispielsweise um eine Gelenkschraube oder um einen Gelenkniet handeln kann. Beim dargestellten Ausführungsbeispiel kommt ein Gelenkniet 38 zur Anwendung, wie er in Figur 4 gezeigt ist. Der Gelenkniet 38 hat einen glatten Schaft 44, der an seinem unteren Ende mit einem umlaufenden Wulst 46 einstückig ausgebildet ist. Im unteren der beiden am Gelenkstück 22 bzw. 24 angeformten Gelenkaugen ist eine umlaufende Nut 48 ausgebildet, in die der Wulst 46 eingerastet ist. Auf diese Weise ist der als Niet ausgebildete Gelenkbolzen 38 vor unbeabsichtigtem Lösen gesichert. Diese einfache Art der Sicherung des Gelenkbolzens ist ebenso wie die vorstehend erläuterte Verbindung zwischen dem Bügelendstück 32 und dem Bügelschaft 30 durch die Verwendung eines Kunststoffwerkstoffs für das Bügelendstück 32 und den Bügelschaft 30 bzw. für das Gelenkstück 22 bzw. 24 ermöglicht.

Aus der vorstehenden Beschreibung ist ersichtlich, daß die Brille grundsätzlich aufgebaut ist wie eine herkömmliche Beschlagbrille bzw. Glasbrille, für die insbesondere typisch ist, daß die Brillengläser 2 und 4 weder oben noch unten von einem Fassungsrand eingefaßt sind und daß die mechanische und tragende Verbindung zwischen der Brücke 8 und den Gelenkstücken 22 und 24 ausschließlich die Brillengläser 2 und 4 selber bilden.

Bei dem vorstehend beschriebenen und in der einzigen Figur gezeigten Ausführungsbeispiel der Brille sind die Brücke 8 und die an der Brücke 8 angeformten Elemente der beiden Befestigungsvorrichtungen 10, d.h. die beiden Schenkel 12 und die beiden Stützabschnitte 14, die beiden Gelenkstücke 22 und 24 einschließlich der an diesen Gelenkstücken angeformten Elemente der zugeordneten Befestigungsvorrichtungen 10, d.h. einschließlich der an den Gelenkstücken 22 und 24 angeformten Stützabschnitte 14 und Schenkel 12, sowie beide Bügel 28 und 30, d.h. beide Bügelschäfte 30 und beide Bügelendstücke 32, sämtlich aus Kunststoff gefertigt. Darüber hinaus sind auch die beiden Gelenkbolzen 14 sowie die vier stiftförmigen Elemente 16 der vier Befestigungsvorrichtungen 10 und auch die Stegstütze 18 sowie die beiden Seitenstege 20 aus Kunststoff gefertigt, so daß sämtliche Elemente der dargestellten Brille (mit Ausnahme gegebenenfalls der beiden Brillengläser 2 und 4) ausschließlich aus Kunststoff bestehen.

Bei diesem Kunststoff handelt es sich vorzugsweise um ein Polyätherimid oder Polyäthersulfon.

Ein bevorzugtes Polyätherimid ist aus folgenden wiederholenden Einheiten aufgebaut:

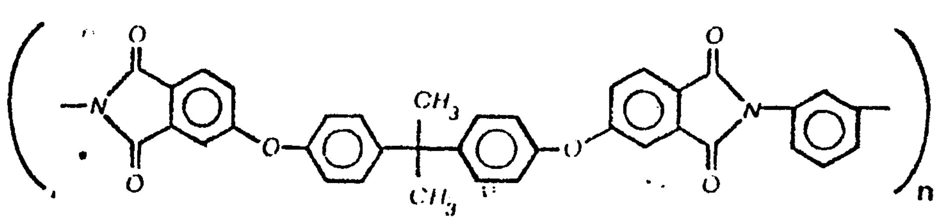

Dieses Polyätherimid ist ein stark gelblich, bernsteinfarbener transparenter thermoplastischer Kunststoff, der vorzugsweise folgende Eigenschaften aufweist:

Eine Zugfestigkeit, gemessen nach DIN 53455, von 90 bis 140 $N/m^2$, eine Dehnung bis zum Bruch, gemessen nach DIN 53455, von 40 bis 80 %, einen Biegemodul, gemessen nach DIN 53457, von 2500 bis 5000 $N/mm^2$, eine IZOD Kerbschlagzähigkeit, gemessen nach ASTM D 2566, von 30 bis 90 J/m, eine Glastemperatur von 210 bis 230°C, eine Wärmeformbeständigkeit DTUL, gemessen bei 1,82 $N/mm^2$ nach ASTM D 648, von 190 bis 210°C und eine Dichte, gemessen nach DIN 53479, von 1,10 bis 1,50 $Mg/m^3$.

Geeignete Polyätherimidwerkstoffe sind in der Firmenbroschüre "Ultem", herausgegeben von General Electric Plastics Europe beschrieben. Ein besonders bevorzugter Werkstoff ist das im Handel erhältliche unverstärkte Polyätherimid "Ultem 1000", das von General Electric geliefert wird. Jedoch können auch die verstärkten Typen eingesetzt werden.

Polyäthersulfone sind ebenfalls an sich bekannte Kunststoffe, wie sie etwa in den GB-PSs 10 78 234 und 11 53 035 beschrieben sind. Ein im Rahmen der Erfindung geeignetes Polyäthersulfon weist folgende wiederholende Einheiten auf:

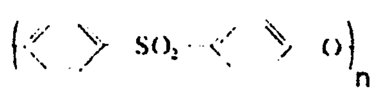

Das vorstehend beschriebene Polyäthersulfon ist ein stark gelblich transparenter, thermoplastischer Kunststoff, der vorzugsweise folgende Eigenschaften hat:

eine Zugfestigkeit bei 20°C, gemessen nach DIN 53455, von 60 bis 140 $N/mm^2$, eine Dehnung bis zum Bruch, gemessen nach ASTM D 638 von 30 bis 90%, einen Biegemodul bei 20°C, gemessen nach ASTM D 790, von 2000 bis 6000 $N/mm^2$, eine IZOD-Kerbschlagzähigkeit, gemessen nach ASTM D 256 (6,4-mm Probekörper gekerbt), von 60 bis 100 J/m, einen Erweichungspunkt nach Vicat, gemessen nach ASTM D 1525, von 210 bis 230°C, eine Wärmeformbeständigkeit DTUL, gemessen nach ASTM D 648, von 190 bis 210°C und eine Dichte, gemessen nach ASTM D 792, von 1,20 bis 1,50 $Mg/m^3$.

Geeignete Polyäthersulfonwerkstoffe sind in der Firmenbroschüre "Victrex , Polyäthersulfon, der hochwärmebeständige technische Thermoplast", veröffentlicht von Imperial Chemical Industries Ltd., 1979, beschrieben. Ein besonders bevorzugter Werkstoff sind die im Handel erhältlichen Polyäthersulfone Victrex 200 P und 300 P, die unverstärkte Typen darstellen. Jedoch können auch verstärkte Typen eingesetzt werden.

Abweichend vom vorstehend beschriebenen Ausführungsbeispiel können die Gelenkbolzen 38 auch aus einem anderen Kunststoff oder einem metallischen Werkstoff bestehen, wobei allerdings die vorstehend beschriebene Ausbildung aus demselben Kunststoff wie der zugeordnete Bügelschaft 30 und das zugeordnete Gelenkstück 22 bzw. 24 bevorzugt ist.

Abweichend vom vorstehend beschriebenen Ausführungsbeispiel können die stiftförmigen Elemente 16 der

Befestigungsvorrichtungen 10 aus einem anderen Kunststoff bestehen, und zwar vorzugsweise aus einem aromatischen Polyamid.

Abweichend vom vorstehend beschriebenen Ausführungsbeispiel kann statt der Seitenstege 20 ein Sattelsteg vorgesehen sein und kann der Stegwerkstoff ein anderer als der vorstehend beschriebene Kunststoffwerkstoff sein. Für die Seitenstege bzw. den Sattelsteg wird ein weicherer Werkstoff bevorzugt, und zwar insbesondere thermoplastisches Polyurethanelastomer.

Darüber hinaus können auch konstruktiv-mechanisch anders ausgebildete Bauteile zur Anwendung kommen. Beispielsweise brauchen die Befestigungsvorrichtungen 10 nicht die dargestellte und erläuterte Ausbildung zu haben. Diese Befestigungsvorrichtunen können auch als herkömmliche Klammern oder auf andere Weise ausgebildet sein, sofern sie die gewünschte Funktion erfüllen, nämlich das zugeordnete Bauteil (Brücke 8 oder Gelenkstück 22 bzw. 24) fest mit der entsprechenden Stelle des Brillenglases 2 bzw. 4 zu verbinden. Außer eine formschlüssige Verbindung herbeiführenden Befestigungsvorrichtungen kommen auch Befestigungsvorrichtungen in Frage, die eine Klebeverbindung herstellen. Schließlich brauchen nicht alle vier Befestigungsvorrichtungen 10 identische Ausbildung zu haben; vielmehr können die beiden Befestigungsvorrichtungen an der Brücke eine andere Ausbildung aufweisen als die beiden Befestigungsvorrichtungen an den Gelenkstücken.

Aufgrund der Ausbildung aus Kunststoff zumindest all derjenigen Teile, die die Geometrie der Brille bestimmen, nämlich die Brückenweite, die Mittelteilbreite,

die Bügellänge, den Öffnungswinkel und den Inklinationswinkel, ermöglicht die beschriebene Brille eine verhältnismäßig einfache Anpassung der bereits fertig montierten Brille an die individuellen Bedürfnisse des Brillenträgers, d.h. insbesondere an dessen Nasen- und Gesichtsform sowie Ohrenlage, Schädelform und Ohrmuldenform, da die aus Kunststoff gefertigten Teile beispielsweise unter geringer Wärmezufuhr bleibend plastisch verformbar sind.

TIEDTKE - BÜHLING - KINNE - GRUPE
PELLMANN - GRAMS - STRUIF



Patentanwälte und
Vertreter beim EPA:
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams
Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München



Patentansprüche

1. Randlose Brille zu Korrektionszwecken mit einem Mittelteil und zwei Seitenteilen, wobei das Mittelteil aus zwei Brillengläsern, einer Brücke, zwei Befestigungsvorrichtungen zum Verbinden der Brücke mit jeweils einem der Brillengläser und zwei Seitenstegen oder einem Sattelsteg sowie zumindest einer entsprechenden Stegstütze besteht und wobei jedes Seitenteil aus einem Gelenkstück, einer Befestigungsvorrichtung zum Verbinden des Gelenkstücks mit einem der beiden Brillengläser, einem Gelenkbolzen und einem Bügel besteht, dadurch gekennzeichnet, daß die Brücke (8), die beiden Gelenkstücke (22, 24), die beiden Bügel (26, 28) und die vier Befestigungsvorrichtungen (10) aus Kunststoff bestehen.

2. Brille nach Anspruch 1, dadurch gekennzeichnet, daß auch die Gelenkbolzen (38) aus Kunststoff bestehen.

3. Brille nach Anspruch 1 oder 2, dadurch gekennzeichnet, daß auch die Stegstütze (18) aus Kunststoff besteht.

4. Brille nach einem der Ansprüche 1 bis 3, dadurch gekennzeichnet, daß der Kunststoff ein Polyätherimid oder Polyäthersulfon ist.

5. Brille nach Anspruch 4, dadurch gekennzeichnet, daß das Polyätherimid folgende wiederholende Einheit aufweist:

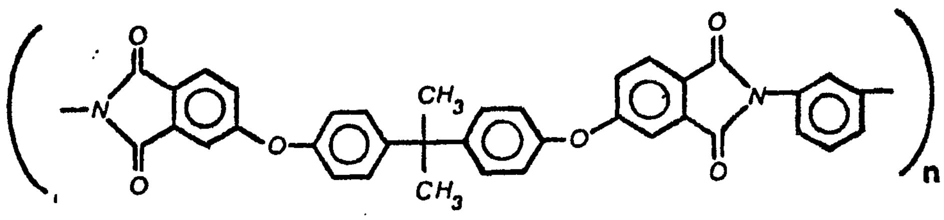

6. Brille nach Anspruch 4 oder 5, dadurch gekennzeichnet, daß das Polyätherimid folgende Eigenschaften hat:

eine Zugfestigkeit, gemessen nach DIN 53455, von 90 bis 140 $N/mm^2$, eine Dehnung bis zum Bruch, gemessen nach DIN 53455, von 40 bis 80%, einen Biegemodul, gemessen nach DIN 53457, von 2500 bis 5000 $N/mm^2$, eine IZOD Kerbschlagzähigkeit, gemessen nach ASTM D 256, von 30 bis 90 J/m, eine Glastemperatur von 210 bis 230°C, eine Wärmeformbeständigkeit DTUL, gemessen nach ASTM D 648, von 190 bis 210°C und eine Dichte, gemessen nach DIN 53479, von 1,10 bis 1,50 $Mg/m^3$.

7. Brille nach Anspruch 4, dadurch gekennzeichnet, daß das Polyäthersulfon folgende wiederholende Einheit aufweist:

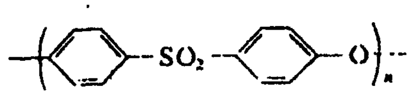

8. Brille nach Anspruch 7, dadurch gekennzeichnet, daß das Polyäthersulfon folgende Eigenschaften hat:

eine Zugfestigkeit bei 20°C, gemessen nach DIN 53455, von 60 bis 140 N/mm², eine Dehnung bis zum Bruch, gemessen nach ASTM D 638, von 30 bis 90%, einen Biegemodul bei 20°C, gemessen nach ASTM D 790, von 2000 bis 6000 N/mm², eine IZOD-Kerbschlagzähigkeit, gemessen nach ASTM D 256 (6,4-mm Probekörper gekerbt), von 60 bis 100 J/m, einen Erweichungspunkt nach Vicat, gemessen nach ASTM D 1525, von 210 bis 230°C, eine Wärmeformbeständigkeit DTUL, gemessen nach ASTM D 648, von 190 bis 210°C und eine Dichte, gemessen nach ASTM D 792, von 1,20 bis 1,50 Mg/m³.

9. Brille nach einem der Ansprüche 4 bis 8, dadurch gekennzeichnet, daß die Oberfläche des Kunststoffs eingefärbt oder metallisiert ist.

Fig. 1

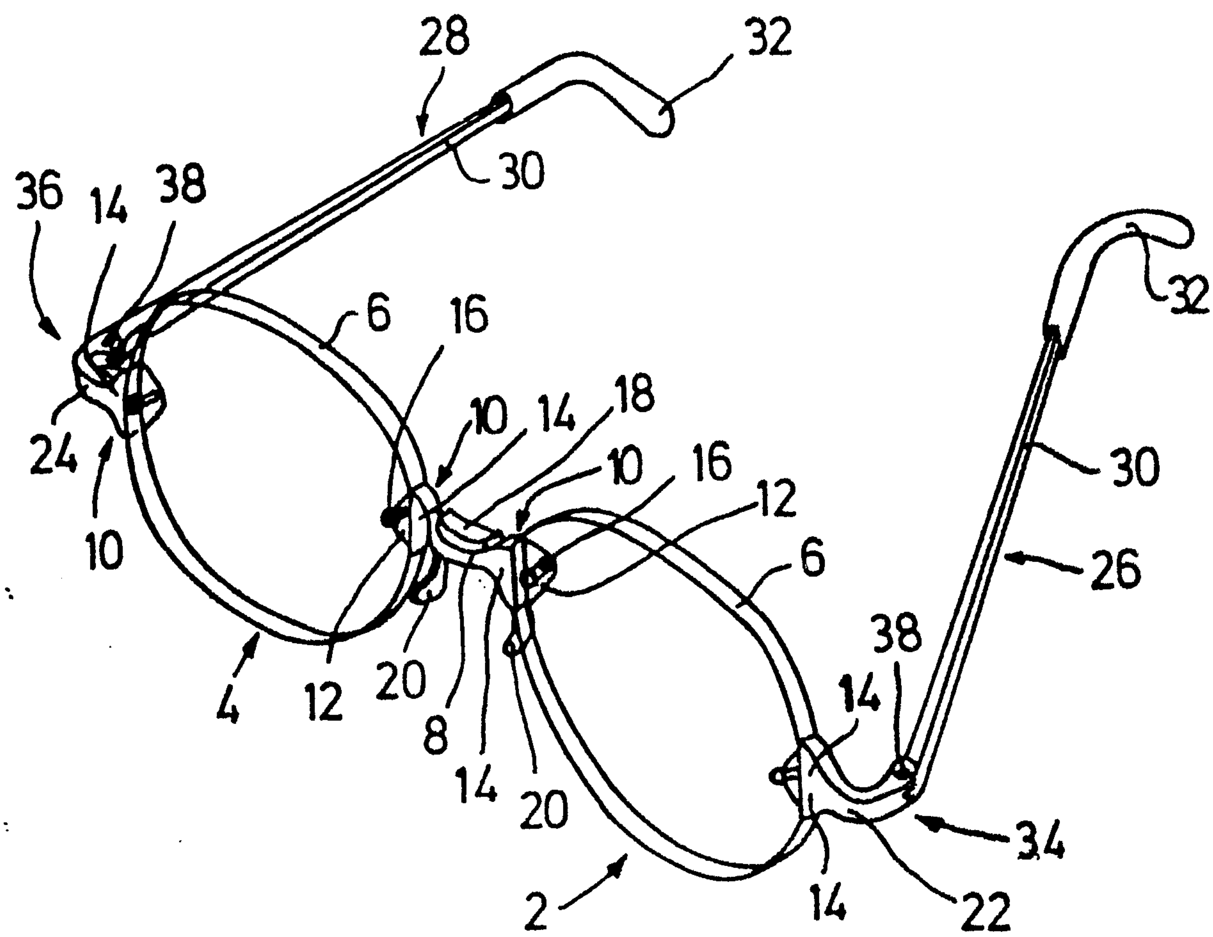

28
32
30
36
14
38
6
16
32
10
14
18
24
10
16
12
30
10
12
6
26
4
12
20
8
14
20
38
14
34
2
14
22

0174392

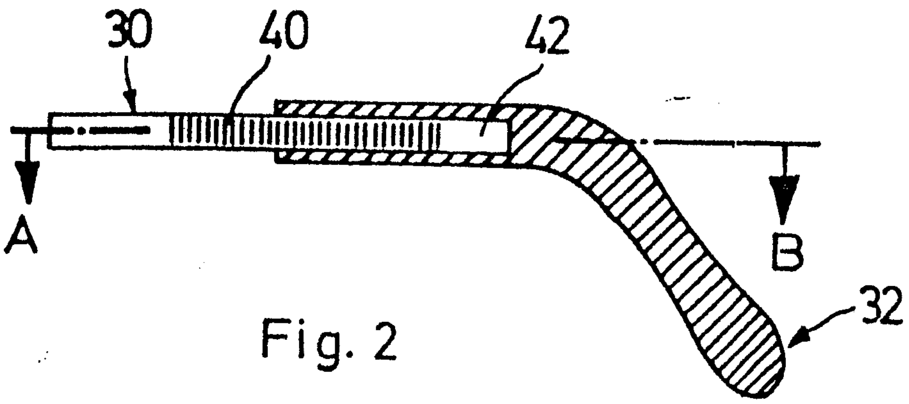


Fig. 2

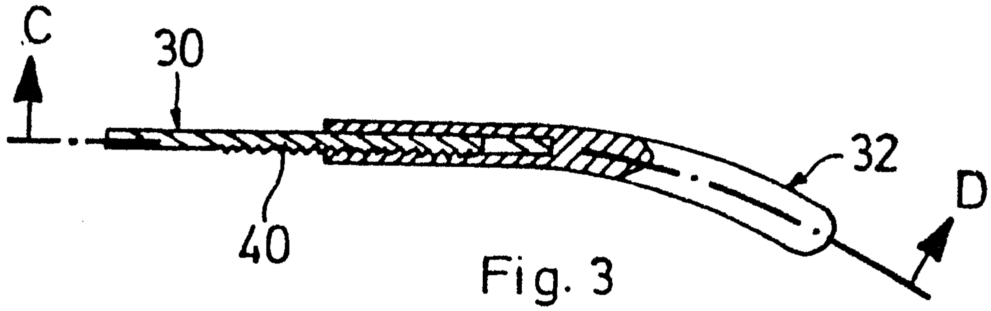


Fig. 3

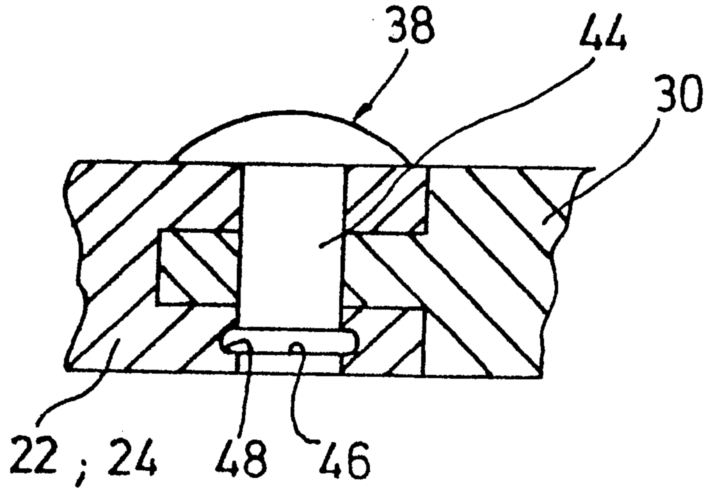


Fig. 4